Europäisches Patentamt

European Patent Office

Office européen des brevets

(19)

(11) Numéro de publication : **0 088 649**
**B1**

(12)

# FASCICULE DE BREVET EUROPÉEN

(45) Date de publication du fascicule du brevet :
**07.08.85**

(51) Int. Cl.⁴ : **C 01 B   3/00**

(21) Numéro de dépôt : **83400248.7**

(22) Date de dépôt : **04.02.83**

(54) **Procédé et appareil pour l'adsorption d'hydrogène par un métal adsorbant et le dégagement de l'hydrogène ainsi adsorbé.**

(30) Priorité : **12.02.82 JP 21794/82**
**12.02.82 JP 21795/82**

(43) Date de publication de la demande :
**14.09.83 Bulletin 83/37**

(45) Mention de la délivrance du brevet :
**07.08.85 Bulletin 85/32**

(84) Etats contractants désignés :
**DE FR GB NL**

(56) Documents cités :
**DE-C-   705 643**
**DE-C-   965 760**
**GB-A- 1 425 369**
**US-A- 3 479 165**

(73) Titulaire : **IWATANI SANGYO KABUSHIKI KAISHA**
**1,4 Hommachi Higashiku**
**Osaka (JP)**

(72) Inventeur : **Mizuno, Tsutomu**
**c/o IWATANI SANGYO K. K. 1 4-Chome Hommachi**
**Higashiku Osaka (JP)**
Inventeur : **Kusaka, Hiroyuki**
**c/o IWATANI SANGYO K. K. 1 4-Chome Hommachi**
**Higashiku Osaka (JP)**

(74) Mandataire : **Bonnetat, Christian et al**
**Cabinet PROPI Conseils 23 rue de Léningrad**
**F-75008 Paris (FR)**

## Description

La présente invention concerne un procédé et un appareil pour l'adsorption d'hydrogène par un métal adsorbant, tel que le magnésium ou un alliage magnésium-nickel, ainsi que pour le dégagement de l'hydrogène ainsi adsorbé. Plus particulièrement, la présente invention permet l'adsorption et le dégagement d'hydrogène par un métal adsorbant de manière très efficace. De façon générale, on sait que pour effectuer l'adsorption d'hydrogène par un adsorbant et pour dégager l'hydrogène ainsi adsorbé, on doit chauffer l'adsorbant à une température élevée. La présente invention permet de créer instantanément les conditions optimales auxquelles l'adsorption et le dégagement d'hydrogène se produisent de manière régulière.

Dans les procédés connus, le chauffage de l'adsorbant est effectué par un dispositif de chauffage auxiliaire, disposé sur le récipient et mettant en œuvre un fluide comme source de chaleur.

Dans ces procédés connus, le métal contenu dans le récipient est chauffé par transfert de chaleur, c'est-à-dire de manière indirecte. De telles méthodes entraînent des pertes de chaleur élevées et nécessitent un temps relativement long avant que la température nécessaire soit obtenue. En règle générale, après la mise en marche du dispositif de chauffage à la température ambiante, cela prend plus d'une minute. De plus, un appareil comportant le récipient et le dispositif de chauffage forme une unité importante en volume et compliquée, de sorte que son coût est élevé. Afin d'accélérer le chauffage de l'adsorbant dans le récipient, on a déjà proposé de nombreuses suggestions, telles que d'accroître autant que possible le nombre des points de chauffage, d'accroître les zones de transfert de chaleur ou d'augmenter le débit du dispositif de chauffage. Cependant, ces suggestions ne peuvent pas résoudre le problème mentionné ci-dessus et elles entraînent une augmentation de la complexité, de l'encombrement et du coût de l'appareil.

L'objet de la présente invention est d'indiquer un procédé et un appareil perfectionné permettant l'adsorption et le dégagement d'hydrogène rapides par un métal adsorbant.

Un autre objet de la présente invention est d'indiquer un procédé et un appareil qui peuvent être mis en œuvre de façon économique sans nuire à l'efficacité de l'adsorption et du dégagement d'hydrogène par un métal adsorbant.

A ces fins, selon l'invention, un procédé pour réaliser l'adsorption d'hydrogène par un métal est caractérisé par la combinaison des étapes suivantes : on dispose un métal adsorbé dans un récipient ; on agence dans ledit récipient une paire d'électrodes électriquement isolées dudit récipient ; on connecte le métal adsorbant à chacune des électrodes de façon à permettre le passage d'un courant électrique, et on introduit de l'hydrogène dans le récipient de façon que cette introduction n'ait pas lieu avant l'activation du métal adsorbant.

Selon un autre aspect avantageux de la présente invention, le procédé pour réaliser le dégagement d'hydrogène adsorbé dans un métal adsorbant est remarquable par la combinaison des étapes suivantes : on dispose le métal ayant adsorbé de l'hydrogène dans un récipient, on agence une paire d'électrodes dans le récipient de façon que celles-ci soient isolées dudit récipient, et on relie le métal à chacune des électrodes de façon à permettre le passage d'un courant à travers celui-ci.

Selon un autre aspect avantageux de la présente invention, un appareil pour réaliser l'adsorption et le dégagement d'hydrogène par un métal comporte un récipient pour contenir le métal adsorbant, ledit récipient comprenant un conduit d'entrée et un conduit de sortie pour l'hydrogène, une paire d'électrodes disposées aux extrémités opposées dudit récipient et isolées électriquement par rapport à celui-ci, lesdites électrodes étant adaptées pour que l'on puisse placer entre elles le métal adsorbant et faire passer un courant à travers celui-ci, et une source électrique reliée auxdites électrodes.

Les figures du dessin annexé feront bien comprendre comment l'invention peut être réalisée.

La figure 1 est une vue en perspective montrant une automobile comportant un appareil conforme à la présente invention.

La figure 2 est une vue schématique illustrant un système comprenant une pluralité d'appareils conformes à la présente invention.

La figure 3 est une coupe partielle à grande échelle de la partie principale d'un récipient d'un mode de réalisation de la présente invention.

La figure 4 est un schéma séquentiel de commande de l'appareil.

La figure 5 est une vue en coupe montrant une variante de réalisation du récipient.

La figure 6 est une vue en coupe d'une variante de réalisation de l'appareil d'adsorption d'hydrogène selon la présente invention.

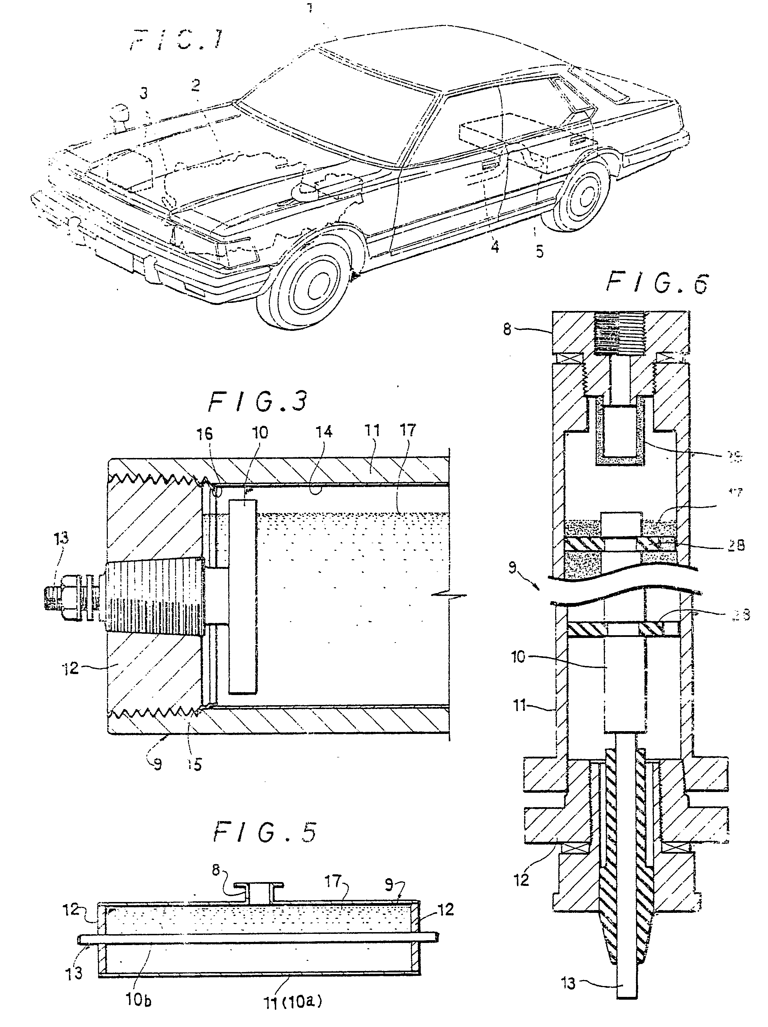

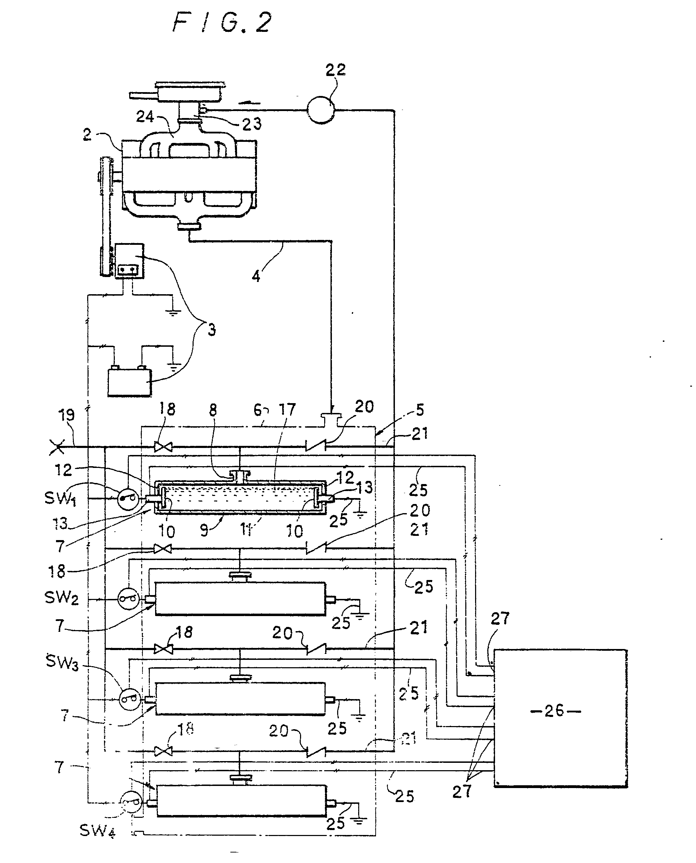

L'automobile 1, montrée par la figure 1, comporte un moteur à hydrogène 2, et une source électrique 3 formée par une batterie et un générateur à courant continu. Le moteur à hydrogène 2 est pourvu d'un pot d'échappement 4 menant à un dispositif d'adsorption d'hydrogène 5 monté à l'arrière de l'automobile 1. Le dispositif d'adsorption d'hydrogène 5 est illustré schématiquement sur la figure 2.

Ce dispositif 5 comporte une enveloppe 6, dans laquelle sont disposés, en nombre désiré, des appareils d'adsorption d'hydrogène. Dans le mode de réalisation représenté, ce dispositif comporte quatre appareils. Ci-après, on ne décrira que l'un d'entre eux.

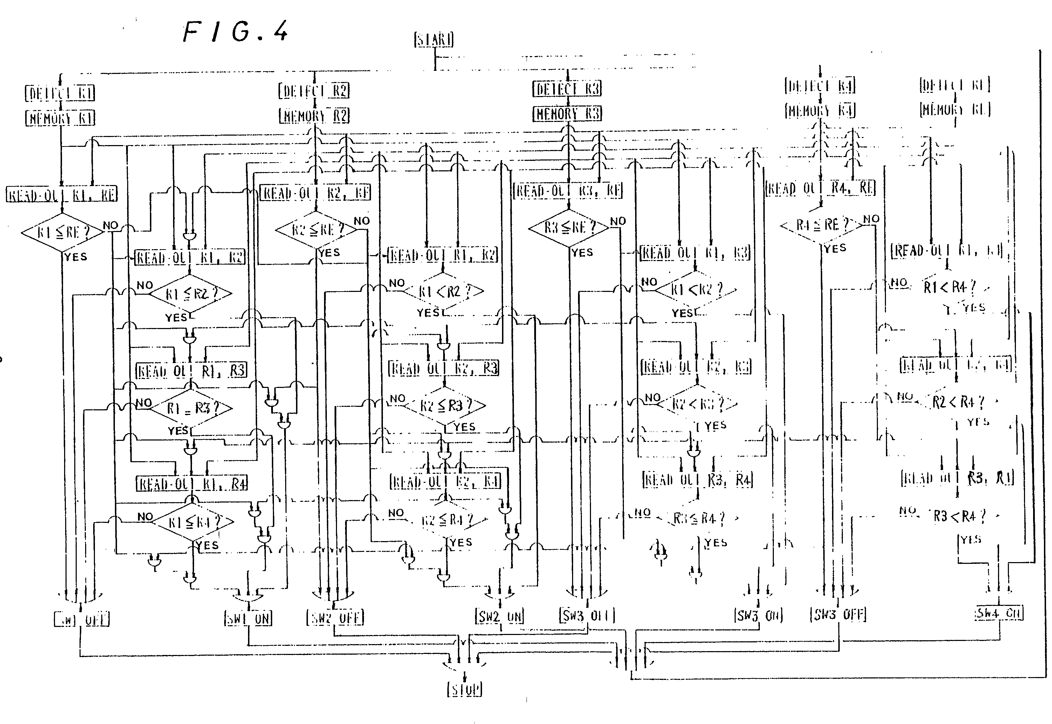

L'appareil d'adsorption d'hydrogène, portant la référence générale 7, comporte un récipient cylindrique 9 et une paire d'électrodes 10 agencées à des extrémités opposées dudit récipient 9. Le chiffre de référence 8 désigne un orifice d'entrée et de sortie d'hydrogène. Comme représenté sur la figure 3, le récipient cylindrique 9 est défini par une paroi latérale cylindrique 11 et des parois d'extrémité à travers lesquelles passent des électrodes 10 fixées auxdites extrémités 12. Les électrodes 10 sont isolées par rapport au récipient 9. Chaque borne 13 des électrodes 10 fait saillie à l'extérieur du récipient 9. La surface intérieure de la paroi latérale cylindrique 11 est revêtue d'une couche isolante 14, par exemple pour aluminitage. Sur la figure 3, le chiffre de référence 15 désigne une partie spécialement usinée pour permettre à la paroi d'extrémité 12 d'être vissée dans l'extrémité du récipient cylindrique 9. De même, cette portion 15 est revêtue d'une couche isolante 16, telle qu'un adhésif isolant. Les parois d'extrémité 12 sont de préférence réalisées en céramique ou en une autre matière isolante. De cette manière, la totalité des surfaces intérieures du récipient 9 sont revêtues d'une matière ou d'une substance isolante.

Le chiffre de référence 17 désigne un adsorbant en poudre placé entre les électrodes 10, de façon que celles-ci soient électriquement reliées l'une à l'autre à travers l'adsorbant.

Un conduit d'entrée d'hydrogène 19, comportant une vanne 18, et un conduit de sortie d'hydrogène 21, comportant une vanne de commande 20, sont reliés à l'orifice 8, le conduit de sortie d'hydrogène 21 étant relié à l'admission 24 du moteur 2 par l'intermédiaire d'un adaptateur de pression 22 et d'un mélangeur air-hydrogène 23.

Chaque borne 13 des électrodes 10 est reliée à la source électrique 3 à travers des interrupteurs de commande SW 1, SW 2, SW 3 et SW 4 disposés en série. Lorsque les commutateurs SW 1, SW 2, SW 3 et SW 4 sont fermés, un courant électrique passe entre les électrodes 10, à travers l'adsorbant 17 disposé entre elles.

A cause de son état pulvérulent, l'adsorbant 17 présente une résistance élevée au passage du courant électrique, ce qui dégage de la chaleur dans ledit adsorbant. De cette manière, l'adsorbant 17 est aisément chauffé à une température désirée à laquelle l'adsorbant est près à dégager l'hydrogène adsorbé. Lorsque l'adsorbant est un alliage magnésium-nickel, il est aisément chauffé à 300 °C, ou à une température voisine de celle-ci. Il a été montré qu'il ne s'écoulait que quelques secondes avant que l'adsorbant atteigne la température désirée. A la température ambiante, la pression d'équilibre de dégagement de l'hydrogène, qui est normalement inférieure à la pression atmosphérique, est augmentée au-dessus de la pression atmosphérique, de sorte que l'hydrogène adsorbé dans l'adsorbant est dégagé de façon active.

La résistance électrique entre les électrodes 10 croît lorsque la quantité d'hydrogène adsorbée dans l'adsorbant 17 croît et décroît lorsque la quantité d'hydrogène adsorbée décroît. On suppose que cette relation entre la résistance électrique et la quantité d'hydrogène adsorbé est due à l'état ou à la quantité des électrons libres présents dans l'adsorbant 17. Lorsque l'adsorbant 17 adsorbe de plus en plus d'hydrogène, le nombre des électrons libres diminue, de sorte que la résistance s'accroît.

Pour utiliser la relation entre la résistance et la quantité d'hydrogène adsorbée, une ligne de détection 25, sensible à la résistance électrique entre les électrodes 10, est reliée à la borne 13 non mise à la terre, de sorte qu'on contrôle la quantité d'hydrogène adsorbé dans l'adsorbant 17 par la détection de la résistance électrique. La ligne de détection 25 est reliée en 27 à un contrôleur 26.

En se reportant à la figure 4, on voit que le contrôleur 26 est prévu pour détecter la résistance R1, R2, R3 et R4 entre les électrodes 10 de chaque appareil 7 et la comparer à une résistance de référence RE afin de déterminer si la résistance détectée est supérieure à la résistance de référence ou non. Si la quantité d'hydrogène adsorbé est inférieure à la quantité désirée, le contrôleur 26 ouvre le commutateur correspondant.

Par exemple, si le récipient 9 associé au commutateur SW 1 est détecté comme ayant moins d'hydrogène adsorbé que la quantité désirée par la comparaison de R1 et RE, le résultat de la comparaison ouvre le commutateur SW 1.

Lorsque l'on trouve qu'un récipient 9 comporte plus d'hydrogène que la quantité désirée, on examine les autres récipients 9 pour vérifier s'ils ont plus d'hydrogène que la quantité désirée ou non. Si l'un d'entre eux comporte moins d'hydrogène que le premier récipient 9, le commutateur SW 1 du récipient 9 mentionné en premier lieu est ouvert. Si les autres récipients 9 comportent plus d'hydrogène que le récipient mentionné en premier lieu et que la quantité désirée, le commutateur SW 1 du récipient mentionné en premier lieu est fermé.

Sur la figure 2 les récipients 9 sont appelés, le premier, le second, le troisième et le quatrième en partant du haut vers le bas. Maintenant, on suppose que le premier récipient a moins d'hydrogène que la quantité désirée tandis que le second, le troisième et le quatrième récipient en comportent plus que la quantité désirée. De plus, le troisième et le quatrième récipient comportent plus d'hydrogène que le second. Dans ce cas, le commutateur SW 2 du second récipient 9 est fermé et les commutateurs SW 3 et SW 4 associés au troisième et au quatrième récipient 9 sont ouverts. A ce stade, le commutateur SW 1 du premier récipient 9 est également ouvert.

Si deux ou plusieurs récipients ont plus d'hydrogène que la quantité désirée, et si les quantités d'hydrogène qu'ils comportent sont égales, le commutateur de l'un des récipients est fermé tandis que le ou les commutateurs de l'autre ou des autres récipients est ouvert selon un ordre prédéterminé.

Par exemple, si chaque récipient contient de l'hydrogène en une quantité non acceptable, le commutateur SW 1 est fermé, tandis que les autres commutateurs SW 2, SW 3 et SW 4 sont ouverts. De cette manière, l'hydrogène absorbé dans le premier récipient 9 est dégagé jusqu'à ce que la quantité d'hydrogène soit inférieure à la quantité désirée, et à ce moment le commutateur SW 2 est fermé de façon à faire passer un courant électrique à travers le second récipient 9 tandis que les autres commutateurs SW 1, SW 3 et SW 4 sont ouverts.

Après l'arrêt du courant électrique traversant l'adsorbant 17 du premier récipient 9, la température active pour dégager l'hydrogène adsorbé dans l'adsorbant 17 est maintenue et le dégagement d'hydrogène continue jusqu'à ce que le second récipient 9 commence à dégager l'hydrogène qu'il a adsorbé. De cette manière, le troisième et le quatrième récipient dégagent l'hydrogène adsorbé, respectivement.

Aussi longtemps que l'un quelconque des récipients 9 comporte plus d'hydrogène que la quantité désirée, la séquence montrée sur la figure 4 est répétée jusqu'à ce que les quantités d'hydrogène dans tous les récipients 9 soient inférieures à la quantité désirée, et alors tous les commutateurs SW 1 à SW 4 sont ouverts. A ce stade, le contrôleur 26 est arrêté.

Pour certaines applications, on peut prévoir un capteur approprié dans le pot d'échappement partant du moteur 2 de façon à détecter un accroissement de la température des gaz d'échappement du moteur par rapport à une valeur de référence. Par cette détection, le contrôleur 26 ouvre tous les commutateurs SW 1 à SW 4 et chaque récipient peut alors être chauffé par les gaz d'échappement. Ceci conduit à une économie d'énergie.

Lorsque l'hydrogène doit être adsorbé par l'adsorbant 17 contenu dans le récipient 9, les commutateurs SW 1 à SW 4 sont fermés par le contrôleur 26 par pression sur un organe de commande, quelle que soit la résistance interne R1, R2, R3 et R4. De cette manière, chaque adsorbant 17 dans les récipients 9 est chauffé à une température, par exemple de l'ordre de 200 à 300 °C. Quand les adsorbants ont atteint la température désirée, chaque vanne 18 est ouverte pour introduire de l'hydrogène dans chaque récipient à travers le conduit d'entrée 19. Les adsorbants 17 commencent à adsorber l'hydrogène à cette température.

La nature auto-chauffante de l'adsorbant 17 active avantageusement les propriétés d'adsorption et de dégagement d'hydrogène au-delà d'un certain niveau.

Dans une variante de réalisation, la partie cylindrique 11 du récipient 9 peut être réalisée en une matière électriquement conductrice, alors que les parois d'extrémité 12 sont en une matière isolante. La paroi latérale 11 est alors utilisée comme électrode 10a mise à la terre, et une tige 10b passe à travers le récipient d'une paroi d'extrémité à l'autre, comme cela est représenté sur la figure 5. La tige 10b est utilisée comme électrode associée et comporte une borne 13 à au moins l'une de ses extrémités au voisinage des parois 12. Selon ce mode de réalisation, la structure du récipient est simplifiée.

La figure 6 montre une autre variante de réalisation dans laquelle le récipient 9 a une paroi latérale cylindrique 11 réalisée en une matière conductrice d'électricité. Le récipient cylindrique 9 est construit de façon à être disposé verticalement. Une borne 13 est prévue du côté inférieur, en saillie par rapport à la paroi d'extrémité 12 et isolée par rapport à celle-ci. La paroi cylindrique 11 forme l'une des électrodes, tandis que l'autre électrode est formée par une tige 10, qui est reliée à la borne inférieure 13. La tige 10 est maintenue par des entretoises 28, par exemple en céramique, de façon à être disposée coaxialement au récipient cylindrique 9. Le chiffre de référence 8 désigne un dispositif de couplage prévu dans la paroi d'extrémité supérieure 12, tandis que le chiffre de référence 29 désigne un filtre réalisé en acier inoxydable fritté.

La surface des électrodes et la distance entre elles sont déterminées en fonction de la source de puissance électrique, ainsi qu'en fonction de la quantité d'hydrogène requise au stade initial et de la durée du fonctionnement du système jusqu'au dégagement d'hydrogène.

L'adsorbant peut se présenter sous n'importe quelle forme, telle que poudre, particules ou pelotes ou en variante, il peut être constitué par un bloc poreux ou un corps fritté.

Le courant électrique peut être soit alternatif, soit continu.

Un détecteur peut de plus être prévu sur chaque appareil 7 pour détecter les températures de l'adsorbant 17 de façon à vérifier que les températures obtenues ont la valeur désirée. On commande alors l'alimentation des électrodes en fonction de cette détection. En variante, on peut prévoir un détecteur de la pression interne dans chaque récipient 9, de façon à vérifier si cette pression interne atteint la pression d'équilibre de dégagement pour l'hydrogène. On commande alors l'alimentation des électrodes en fonction de la pression détectée, ce qui permet d'éviter une surchauffe de l'adsorbant. Là également, on obtient une économie d'énergie.

Comme cela apparaît clairement de ce qui précède, l'adsorbant est chauffé de façon pratiquement instantanée à la température désirée à laquelle ont lieu de façon efficace l'adsorption ou le dégagement d'hydrogène. De plus, l'appareil a une structure simple et compacte. Même lorsque l'on utilise plusieurs appareils, l'ensemble présente un volume restreint permettant de le monter par exemple dans les automobiles.

**Revendications**

1. Procédé pour réaliser l'adsorption d'hydrogène sur un métal adsorbant à une température élevée, caractérisé en ce qu'il comprend la combinaison d'étapes suivantes :

— on dispose ledit métal adsorbant dans un récipient ;

— on agence une paire d'électrodes dans ledit récipient, de façon que lesdites électrodes soient isolées électriquement de celui-ci ;

— on relie ledit métal adsorbant auxdites électrodes de façon à pouvoir le faire traverser par un courant électrique ;

— et on introduit de l'hydrogène dans ledit récipient de façon que cette introduction n'intervienne pas antérieurement à l'activation du métal adsorbant.

2. Procédé pour réaliser le dégagement d'hydrogène adsorbé dans un métal adsorbant à une température élevée, caractérisé en ce qu'il comprend la combinaison d'étapes suivantes :

— on dispose ledit métal adsorbant dans un récipient ;

— on agence une paire d'électrodes à des extrémités opposées dudit récipient, de façon que lesdites électrodes soient isolées par rapport à celui-ci ;

— on relie ledit métal adsorbant auxdites électrodes de façon à faire passer un courant entre elles ;

— on recueille l'hydrogène dégagé par le métal adsorbant.

3. Appareil pour réaliser l'adsorption d'hydrogène par un métal adsorbant à une température élevée, caractérisé en ce qu'il comprend :

— un récipient pour contenir ledit métal adsorbant, ledit récipient comprenant une arrivée d'hydrogène et une sortie d'hydrogène ;

— une paire d'électrodes disposées à des extrémités opposées dudit récipient et isolées par rapport à celui-ci ;

— une source électrique pour l'alimentation desdites électrodes.

4. Appareil selon la revendication 3, caractérisé en ce que l'une des électrodes est formée par ledit récipient lui-même réalisé en une matière conductrice d'électricité, et en ce que l'autre électrode est formée par un conducteur en forme de tige traversant coaxialement ledit récipient.

5. Appareil selon la revendication 3, caractérisé en ce que ledit récipient présente une surface interne électriquement non conductrice.

6. Récipient selon la revendication 5, caractérisé en ce que la surface interne non conductrice d'électricité est réalisée par aluminitage.

## Claims

1. In a method for effecting hydrogen sorption on an adsorbent metal at an elevated temperature, the method comprising :

— placing said adsorbent metal in a vessel ;

— providing a pair of electrodes in said vessel, wherein said vessel is insulated to said electrodes ;

— connecting said adsorbent metal to said electrodes as as to effect electric current therethrough ; and

— introducing hydrogen into said vessel not earlier than the energizing of said adsorbent metal.

2. In a method for effecting the dissociation of hydrogen adsorbed in an adsorbent metal at an elevated temperature, the method comprising :

— placing said adsorbent metal in a vessel ;

— providing a pair of electrodes at opposite ends of said vessel, wherein said vessel is insulted to said electrodes ;

— connecting said adsorbent metal to said electrodes so as to effect electric current therebetween ; and

— collecting the hydrogen dissociated from said adsorbent metal.

3. In an apparatus for effecting hydrogen sorption on an adsorbent metal at an elevated temperature, the apparatus comprising :

— a vessel for containing said adsorbent metal, said vessel including a hydrogen intake path and a hydrogen discharge path ;

— a pair of electrodes located at opposite ends of said vessel, wherein said vessel is insulted to said electrodes ; and

— a source of power for supplying electric current to said electrodes.

4. An apparatus as defined in Claim 3, wherein one of said electrodes is constitued by said vessel made of electrically conductive material, and wherein the other electrode is provided by a bar-shaped conductor passed coaxially of said vessel.

5. An apparatus as defined in Claim 3, wherein said vessel has an inner surface of electrical non-conductivity.

6. An apparatus as defined in Claim 5, wherein the non-conductive inner surface of said vessel is made by almite processing.

## Patentansprüche

1. Verfahren zur Wasserstoffaufnahme durch ein adsorbierendes Metall bei erhöhter Temperatur, gekennzeichnet durch die Kombination der Verfahrensschritte des

— Einbringens des adsorbierenden Metalls in ein Behältnis,

— Einsetzens eines Elektrodenpaares in dem Behältnis, derart, daß die Elektroden von diesem elektrisch isoliert sind,

— Verbindens des adsorbierenden Metalls mit den Elektroden, derart, daß es vom elektrischen Strom durchströmt wird, und

— Einführens von Wasserstoff in das Behältnis, derart, daß die Einführung nicht vor der Aktivierung des adsorbierenden Metalls eintritt.

2. Verfahren zur Abgabe des adsorbierten Wasserstoffs durch ein adsorbierendes Metall bei erhöhter Temperatur, gekennzeichnet durch die Kombination der Verfahrensschritte des

— Einbringens des adsorbierenden Metalls in ein Behältnis,

— Einsetzens eines Elektrodenpaares an den gegenüberliegenden Enden des Behältnisses, derart, daß die Elektroden von diesem elektrisch isoliert sind,

— Verbindens des adsorbierenden Metalls mit den Elektroden, derart, daß zwischen ihnen ein elektrischer Strom fließen kann, und

— des Auffangens des vom adsorbierenden Metall abgegebenen Wasserstoffs.

3. Gerät zur Durchführung der Wasserstoffaufnahme durch ein adsorbierendes Metall bei erhöhter Temperatur, gekennzeichnet durch

— ein Behältnis zum Aufnehmen des adsorbierenden Metalls, wobei das Behältnis einen Eingang und einen Ausgang für Wasserstoff aufweist,

— zwei an den gegenüberliegenden Enden des Behältnisses und diesem gegenüber isoliert angeordnete Elektroden und

— eine Stromquelle zur Versorgung der Elektroden.

4. Gerät nach Anspruch 3, dadurch gekennzeichnet, daß eine der Elektroden das Behältnis als solches bildet, das aus einem elektrisch leitenden Werkstoff gefertigt ist, und daß die andere Elektrode als ein Leiter in Form eines Stabes gebildet ist, der koaxial das Behältnis durchquert.

5. Gerät nach Anspruch 3, dadurch gekennzeichnet, daß das Behältnis eine Innenfläche aufweist, die elektrisch nicht leitend ist.

6. Behältnis nach Anspruch 5, dadurch gekennzeichnet, daß die elektrisch nicht leitende Innenfläche durch Aluminiumbeschichtung geschaffen wird.

*FIG.1*

*FIG.6*

*FIG.3*

*FIG.5*

F I G. 2

FIG.4